# EUROPEAN PATENT SPECIFICATION

(11) **EP 0 744 309 B1**
(45) Date of publication and mention of the grant of the patent: **24.10.2001**
(21) Application number: 96108270.8
(22) Date of filing: 23.05.1996
(51) Int. Cl.: B60H 3/06, B01D 46/42, B01D 46/10

(54) **An air filtration device for an air-conditioning system, in particular for a vehicle**
Luftfilter für eine Klimaanlage, insbesondere für Kraftfahrzeuge
Installation de filtre à air pour système de climatisation, particulièrement véhicule automobile

(30) Priority: 26.05.1995 IT TO950420
(43) Date of publication of application: 27.11.1996
(73) Proprietor: FIAT AUTO S.p.A., 10135 Torino (IT)
(72) Inventor: Aragno, Franco, 10093 Collegno (IT); Levorin, Mauro, 10142 Torino (IT)
(74) Representative: Plebani, Rinaldo

(56) References cited:
- EP-A- 0 380 026
- EP-A- 0 684 152
- DE-A- 3 532 169
- FR-A- 2 711 548
- GB-A- 2 273 889

## Description

The present invention concerns an air filtration device for an air-conditioning system, in particular a pollen filter for a vehicle.

Air filtration devices are known which comprise essentially one or more filter cartridges which are generally disposed in an air supply duct forming part of a vehicle air-conditioning system.

The known devices have the disadvantage that such filter cartridges are not easy to replace as they are usually located in inaccessible positions and require several parts of the vehicle to be removed.

This disadvantage is not completely solved by the device disclosed in FR-A-2 711 548, in which the filter is housed in a seat formed in a box closed by a cover: in order to replace the filter it is necessary to open the cover and remove the filter from the seat: moreover, the filter is bulky and difficult to be moved. It is also known from EP-A-0 380 026 a generic air filtration device in which a support element provided with a .filter is movably housed in a seat passing through an air duct: even if the filter is relatively easily removable from the seat, when the device is applied to an air-conditioning system of a motor vehicle the problem of an easily accessible location of the filter is still present.

The object of the present invention is to provide an air filtration device for an air-conditioning system, which is simple and economical to produce, which does not have the disadvantages of the known devices and which, in particular, allows the worn-out or blocked filter element to be replaced rapidly.

According to the present invention there is provided an air filtration device for an air-conditioning system, as claimed in claim 1.

In this way, the air filtration device is simple and inexpensive to produce and can easily and rapidly be replaced by the simple removal of the support element from its seat, without the need to remove other vehicle parts.

Further characteristics and advantages of the present invention will become clear from the following description of some non-limitative embodiments, with reference to the accompanying drawings, in which:
Figure 1 is a perspective view of an air filtration device according to the present invention for an air-conditioning system, in the position of use;
Figure 2 is a section taken on the line II-II of Figure 1;
Figure 3 is a perspective view on an enlarged scale of a detail of Figures 1 and 2;
Figure 4 is a perspective view of a variant of the detail of Figure 3;
Figure 5 is a perspective view of a variant of the device of Figure 1, in the position of use;
Figure 6 is a perspective view on an enlarged scale of the device of Figure 5, in a different operative state; and
Figure 7 is a perspective view on an enlarged scale of a detail of Figure 5.

With reference to the accompanying drawings, the reference numeral 1 generally indicates an air filtration device for an air-conditioning system 2, in particular a pollen filter device for a vehicle 3.

The device 1 includes a filter medium 4, for example, in the form of a rectangular slab of material, a support element 5 for the filter medium 4, a seat 6 for the element 5, and a sensor 7 connected to a warning light 8 for indicating any blockage of the filter medium 4.

The seat 6 is a drawer housing formed in the engine compartment 9 of the vehicle 3, the top of which is usually closed by a bonnet 10, and is located at the base of a front windscreen 11 of the vehicle 3 itself; in addition, the seat 6 passes through an upstream portion 12 of an air duct 13 forming part of the air-conditioning system 2.

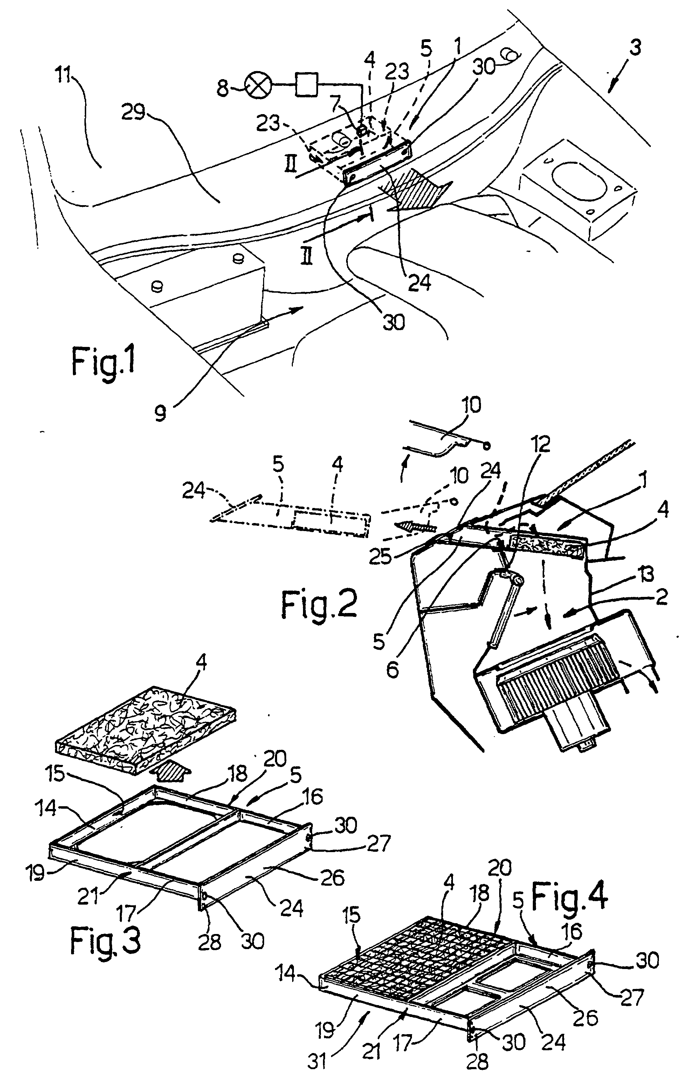

With reference to Figures 2, 3 and 4, the element 5 is constituted by a frame structure comprising a rectangular frame 14 which defines an internal housing 15 for the filter medium 4, two arms 16, 17 disposed as extentions of respective parallel sides 18, 19 of the frame 14 and defining, together with the sides 18, 19, two guides 20, 21 which can slide within respective side portions 22, 23 of the seat 6, and a face-plate 24 integral with the free ends of the arms 16, 17 and extending perpendicular thereto. The element 5 may be formed integrally by moulding from plastics or other suitable material.

As can clearly be seen in Figure 3, the filter medium 4 can be removed from the housing 15 formed in the element 5 through a lateral opening 25 in the seat 6, which is usually kept closed and substantially fluid-tight by the face-plate 24.

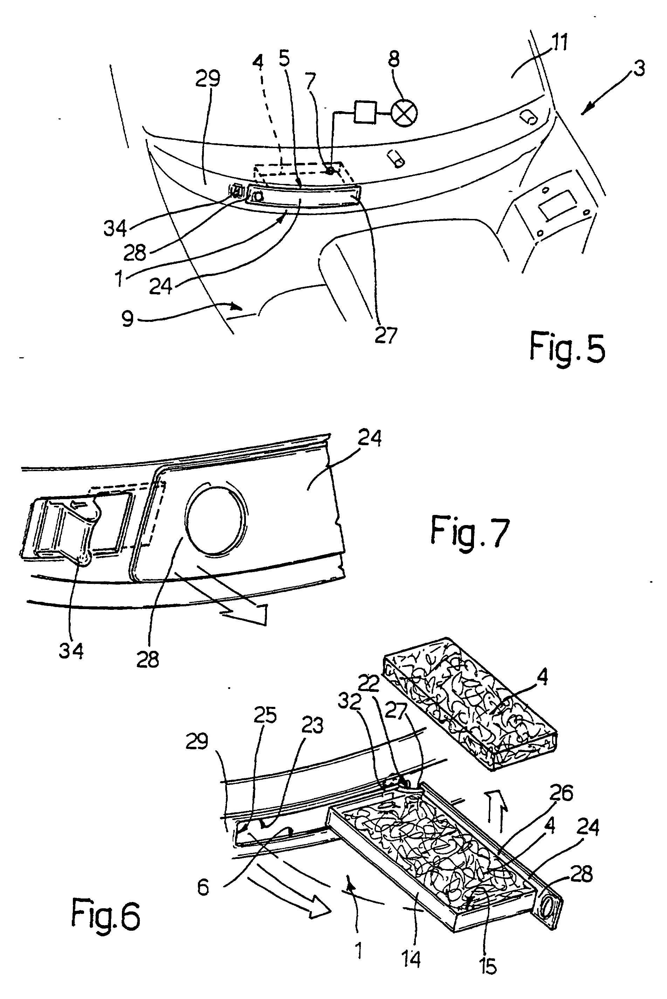

With reference to Figures 3 and 4, the face-plate 24 includes an intermediate portion 26 extending between the arms 16, 17, and two end portions 27, 28, each projecting laterally of the respective arm 16, 17. When the element 5 is inserted in the seat 6, each of the end portions 27, 28 can be fixed to a wall 29 of the engine compartment 9 by known fixing means 30 such as, for example, screws or snap mechanisms. In this position, the face-plate 24 is disposed substantially flush with the wall 29, formed with the through-opening 25 of the seat 6.

In use, the element 5 is movable by means of the guides 20, 21 sliding against the respective side portions 22, 23 of the seat 6 between an extended position in which the housing 15 is completely outside the seat 6, whereby the filter medium 4 projects from the seat 6 through the opening 25, and a retracted position in which it is inserted in the seat 6 such that the filter medium 4 is positioned in series with the duct 13. When the filter means 4 is blocked, the sensor 7 (which functions by sensing the low pressure created beneath the filter) sends a signal to the warning light 8 which lights up. At this point, it suffices to open the bonnet 10 to gain access to the engine compartment 9 and, then, after having released the fixing means 30, to move the element 5 from the retracted position to the extended position and replace the filter medium 4.

In a first variant illustrated in Figure 4, the filter medium 4 may be formed integrally with the frame element 5 so as to form a self-supporting, interchangeable cartridge 31. In this case, when the cartridge 31 is blocked, the entire assembly comprising the frame 5 and the filter medium 4 is replaced.

In a second variant illustrated in Figures 5, 6 and 7, the frame element 5 no longer has the arms 16, 17 and the face-plate 24 therefore forms one of the sides of the rectangular frame 14 defining the housing 15 in which the filter medium 4 is releasably housed.

One of the end portions 27 of the face-plate 24 is attached to a corresponding side portion 22 of the seat 6 by a hinge 32 while the other end portion 28 is attachable to the wall 29 of the engine compartment 9 by a known snap release mechanism 34 or other type of locking device.

In this case, the element 5 can move between the extended and retracted positions by rotation of the element 5 itself about the axis of the hinge 32 which is substantially parallel to the axis of the duct 13. In order to replace the filter means 4, it suffices to release the mechanism 34 and rotate the element 5 into the extended position.

Finally, it is clear that further modifications and variations may be made to the air filtration device described and illustrated which do not depart from the ambit of protection defined by the claims.

## Claims

1. An air filtration device (1) for an air-conditioning system (2) in a motor vehicle (3), including filter means (4), a support element (5) for the filter means (4), a seat (6) for the support element (5), the seat (6) passing through an air duct (13) of the air conditioning system (2), the said support element (5) being guided in the seat (6) between an extended position, in which it supports the filter means (4) outside the seat (6), and a retracted position in which it is inserted in the seat (6) so that the filter means (4) is disposed in series with the duct (13); the said seat (6) being located in an engine compartment (9) of the said vehicle at a base of a windscreen (11) of the vehicle, the seat having a lateral opening (25) for the introduction of the support element (5) which is substantially aligned to the said windscreen (11);
**characterised in that** the said seat (5) is located in such a manner that the support element (5) is removable from the seat (6) through the said lateral opening (25) in a direction substantially perpendicular to said windscreen (11) and towards the outside of the vehicle.

2. A device according to Claim 1, **characterised in that** the said lateral opening (25) of the seat is formed in a wall (29) of the said engine compartment (9) which is substantially aligned with the said windscreen (11); the said support element (5) presenting a face-plate (24) which is disposed substantially flush with the said wall (29) formed with the said lateral opening (25) of the seat (6) when the said support element (5) assumes its retracted position in which it is inserted in the seat (6).

3. A device according to Claim 2, **characterised in that** the support element is a frame (5) which can be coupled with the seat (6) and has a housing (15) for the filter means (4).

4. A device according to Claim 3, **characterised in that** the frame (5) is slidably inserted in the seat (6).

5. A device according to Claim 3, **characterised in that** one end (27) of the frame (5) is connected to the seat (6) by a hinge (32) such that the frame (5) can move between its extended and retracted positions by rotation about the axis of the hinge (32).

6. A device according to any one of Claims 2 to 4, **characterised in that** the filter means (4) is formed integrally with the frame (5) so as to form a self-supporting, interchangeable cartridge (31).

7. A device according to any one of Claims 2 to 5, **characterised in that** the filter means (4) simply rests in the housing (15) so as to be removable therefrom.

8. A device according to any one of the preceding claims, **characterised in that** the seat (6) is disposed in an end portion of the air duct (13).

9. A device according to any one of the preceding claims, **characterised in that** the seat (6) is disposed in an upstream portion (12) of the air duct (13).

10. A device according to any one of the preceding claims, **characterised in that** the support element (5) is fixable in its retracted position by locking means (30, 34).

## Patentansprüche

1. Luftfilterungsvorrichtung (1) für ein Klimatisierungssystem (2) in einem Kraftfahrzeug (3), die Filtermittel (4), ein Unterstützungselement (5) und einen Sitz (6) für das Unterstützungselement (5) umfaßt, wobei der Sitz (6) durch einen Luftkanal (13) des Klimatisierungssystems (2) verläuft, das Unterstützungselement (5) im Sitz (6) zwischen einer ausgefahrenen Position, in der es die Filtermittel (4) außerhalb des Sitzes (6) unterstützt, und einer eingefahrenen Position, in der es in den Sitz (6) eingeschoben ist, so daß die Filtermittel (4) in einer Reihe mit dem Kanal (13) angeordnet sind, geführt wird; wobei sich der Sitz (6) in einem Motorraum (9) des Fahrzeugs an einer Grundlinie einer Windschutzscheibe (11) des Fahrzeugs befindet, wobei der Sitz eine seitliche Öffnung (25) für die Einführung des Unterstützungselements (5) hat, die im wesentlichen auf die Windschutzscheibe (11) ausgerichtet ist;
**dadurch gekennzeichnet, daß** der Sitz (5) in der Weise angeordnet ist, daß das Unterstützungselement (5) durch die seitliche Öffnung (25) in einer Richtung, die zur Windschutzscheibe (11) im wesentlichen senkrecht ist und zur Außenseite des Fahrzeugs weist, aus dem Sitz (6) entnehmbar ist.

2. Vorrichtung nach Anspruch 1, **dadurch gekennzeichnet, daß** die seitliche Öffnung (25) des Sitzes in einer Wand (29) des Motorraums (9) gebildet ist, die auf die Windschutzscheibe (11) im wesentlichen ausgerichtet ist; wobei das Unterstützungselement (5) eine Stirnplatte (24) aufweist, die im wesentlichen bündig mit der Wand (29) angeordnet ist und in der die seitliche Öffnung (25) des Sitzes (6) ausgebildet ist, wenn das Unterstützungselement (5) seine eingefahrene Position einnimmt, in der es in den Sitz (6) eingeschoben ist.

3. Vorrichtung nach Anspruch 2, **dadurch gekennzeichnet, daß** das Unterstützungselement ein Rahmen (5) ist, der mit dem Sitz (6) verbunden werden kann und ein Gehäuse (15) für die Filtermittel (4) besitzt.

4. Vorrichtung nach Anspruch 3, **dadurch gekennzeichnet, daß** der Rahmen (5) in den Sitz (6)-gleitend eingeschoben wird.

5. Vorrichtung nach Anspruch 3, **dadurch gekennzeichnet, daß** ein Ende (27) des Rahmens (5) mit dem Sitz (6) durch ein Scharnier (32) verbunden ist, derart, daß sich der Rahmen (5) zwischen seiner ausgefahrenen und seiner eingefahrenen Position durch Drehung um die Achse des Scharniers (32) bewegen kann.

6. Vorrichtung nach einem der Ansprüche 2 bis 4, **dadurch gekennzeichnet, daß** die Filtermittel (4) einteilig mit dem Rahmen (5) ausgebildet sind, so daß sie eine selbsttragende, austauschbare Kassette (31) bilden.

7. Vorrichtung nach einem der Ansprüche 2 bis 5, **dadurch gekennzeichnet, daß** die Filtermittel (4) einfach im Gehäuse (15) liegen, um daraus entnehmbar zu sein.

8. Vorrichtung nach einem der vorhergehenden Ansprüche, **dadurch gekennzeichnet, daß** der Sitz (6) in einem Endabschnitt des Luftkanals (13) angeordnet ist.

9. Vorrichtung nach einem der vorhergehenden Ansprüche, **dadurch gekennzeichnet, daß** der Sitz (6) in einem Einlaßabschnitt (12) des Luftkanals (13) angeordnet ist.

10. Vorrichtung nach einem der vorhergehenden Ansprüche, **dadurch gekennzeichnet, daß** das Unterstützungselement (5) in seiner eingefahrenen Position durch Verriegelungsmittel (30, 34) befestigt werden kann.

## Revendications

1. Dispositif de filtration d'air (1) pour un système de climatisation (2) dans un véhicule automobile (3), comprenant un moyen filtrant (4), un élément de support (5) du moyen filtrant (4), un logement (6) de l'élément de support (5), le logement (6) traversant un conduit d'air (13) du système de climatisation (2), ledit élément de support (5) étant guidé dans le logement (6) entre une position allongée, dans laquelle il supporte le moyen filtrant (4) à l'extérieur du logement (6), et une position rétractée dans laquelle il est inséré dans le logement (6) de sorte que le moyen filtrant (4) est disposé en série avec le conduit (13) ; ledit logement (6) étant situé dans un compartiment moteur (9) dudit véhicule à la base d'un pare-brise (11) du véhicule, le logement comportant une ouverture latérale (25), servant à l'introduction de l'élément de support (5), qui est sensiblement alignée avec ledit pare-brise (11) ;
**caractérisé en ce que** ledit logement (5) est disposé de telle façon que l'élément de support (5) peut être retiré du logement (6) par ladite ouverture latérale (25) selon une direction sensiblement perpendiculaire audit pare-brise (11) et vers l'extérieur du véhicule.

2. Dispositif selon la revendication 1,
**caractérisé en ce que** ladite ouverture latérale (25) du logement est formée dans une paroi (29) dudit compartiment moteur (9) qui est sensiblement alignée avec ledit pare-brise (11) ; ledit élément de support (5) présentant une plaque frontale (24) qui est disposée de façon sensiblement affleurante avec ladite paroi (29) comprenant ladite ouverture latérale (25) du logement (6) lorsque ledit élément de support (5) prend sa position rétractée dans laquelle il est inséré dans le logement (6).

3. Dispositif selon la revendication 2,
**caractérisé en ce que** l'élément de support est un cadre (5) qui peut être raccordé au logement (6) et possède un corps (15) pour le moyen filtrant (4).

4. Dispositif selon la revendication 3,
**caractérisé en ce que** le cadre (5) est inséré de façon coulissante dans le logement (6).

5. Dispositif selon la revendication 3,
**caractérisé en ce qu'**une extrémité (27) du cadre (5)' est reliée au logement (6) par une charnière (32) de telle sorte que le cadre (5) peut se déplacer entre ses positions allongée et rétractée par une rotation autour de l'axe de la charnière (32).

6. Dispositif selon l'une quelconque des revendications 2 à 4, **caractérisé en ce que** le moyen filtrant (4) est formé d'un seul tenant avec le cadre (5) de façon à former une cartouche interchangeable autoportante (31).

7. Dispositif selon l'une quelconque des revendications 2 à 5, **caractérisé en ce que** le moyen filtrant (4) repose simplement dans le corps (15) de façon à pouvoir en être retiré.

8. Dispositif selon l'une quelconque des revendications précédentes, **caractérisé en ce que** le logement (6) est disposé dans une partie d'extrémité du conduit d'air (13).

9. Dispositif selon l'une quelconque des revendications précédentes, **caractérisé en ce que** le logement (6) est disposé dans une partie en amont (12) du conduit d'air (13).

10. Dispositif selon l'une quelconque des revendications précédentes, **caractérisé en ce que** l'élément de support (5) peut être fixé dans sa position rétractée par un moyen de verrouillage (30, 34).
